# EUROPÄISCHE PATENTANMELDUNG

(11) **EP 2 187 597 A1**
(43) Veröffentlichungstag der Anmeldung: **19.05.2010**
(21) Anmeldenummer: 09013665.6
(22) Anmeldetag: 30.10.2009
(51) Int. Cl.: H04L 29/08

(54) **Übertragung von Daten in Telekommunikationsnetzen**

(30) Priorität: 12.11.2008 DE 102008057010
(71) Anmelder: Vodafone Holding GmbH, 40213 Düsseldorf (DE)
(72) Erfinder: Gerlach, Heiko, 40211 Düsseldorf (DE)
(74) Vertreter: Ring & Weisbrodt

(57) **Zusammenfassung**

Die vorliegende Erfindung betrifft ein Verfahren zur Übertragung von Daten in Telekommunikationsnetzen, vorzugsweise Mobilfunknetzen, insbesondere gemäß einem GPRS- und/oder UMTS-Funknetzstandard, mittels eines Datenübertragungsdienstes eines Telekommunikationsnetzes, wobei ein in einem Telekommunikationsnetz betreibbares Endgerät eine Datenübertragungsanforderung über das Telekommunikationsnetz an eine Daten zur Übertragung bereithaltende Einrichtung sendet und die Daten zur Übertragung bereithaltende Einrichtung die entsprechend der Datenübertragungsanforderung angeforderten Daten über das Telekommunikationsnetz an das Endgerät sendet. Um die Übertragung von Daten in Telekommunikationsnetzen zu verbessern weist die Datenübertragungsanforderung eine Information über seitens des Endgerätes zur Speicherung und/oder Weiterverarbeitung von Daten frei zur Verfügung stehenden Speicherplatz auf. Die vorliegende Erfindung betrifft ferner einen Netzknoten in einem Telekommunikationsnetz, vorzugsweise einem Mobilfunknetz, insbesondere gemäß einem GPRS- und/oder UMTS-Funknetzstandard, welcher an der Übertragung von Daten in dem Telekommunikationsnetz mittels eines Datenübertragungsdienstes des Telekommunikationsnetzes beteiligt ist und welcher ausgebildet und/oder eingerichtet ist ein erfindungsgemäßes Verfahren zumindest teilweise auszuführen. Gegenstand der vorliegenden Erfindung ist des weiteren eine Daten zur Übertragung über ein Telekommunikationsnetz bereithaltende Einrichtung, welche zumindest zur Datenübertragung mittels eines Datenübertragungsdienstes des Telekommunikationsnetzes mit dem Telekommunikationsnetz, vorzugsweise einem Mobilfunknetz, insbesondere gemäß einem GPRS- und/oder UMTS-Funknetzstandard, verbunden ist, welche ausgebildet und/oder eingerichtet ist, ein erfindungsgemäßes Verfahren zumindest teilweise auszuführen. Darüber hinaus betrifft die vorliegende Erfindung ein Endgerät zum Betrieb in Telekommunikationsnetzen, vorzugsweise Mobilfunknetzen, insbesondere gemäß einem GPRS- und/oder UMTS-Funknetzstandard, welches ausgebildet und/oder eingerichtet ist ein erfindungsgemäßes Verfahren zumindest teilweise auszuführen.

## Beschreibung

Die vorliegende Erfindung betrifft ein Verfahren zur Übertragung von Daten in Telekommunikationsnetzen, vorzugsweise Mobilfunknetzen, insbesondere gemäß einem GPRS- und/oder UMTS-Funknetzstandard, mittels eines Datenübertragungsdienstes eines Telekommunikationsnetzes, wobei ein in einem Telekommunikationsnetz betreibbares Endgerät eine Datenübertragungsanforderung über das Telekommunikationsnetz an eine Daten zur Übertragung bereithaltende Einrichtung sendet und die Daten zur Übertragung bereithaltende Einrichtung die entsprechend der Datenübertragungsanforderung angeforderten Daten über das Telekommunikationsnetz an das Endgerät sendet.

Die vorliegende Erfindung betrifft ferner einen Netzknoten in einem Telekommunikationsnetz, vorzugsweise einem Mobilfunknetz, insbesondere gemäß einem GPRS- und/oder UMTS-Funknetzstandard, welcher an der Übertragung von Daten in dem Telekommunikationsnetz mittels eines Datenübertragungsdienstes des Telekommunikationsnetzes beteiligt ist und welcher ausgebildet und/oder eingerichtet ist ein erfindungsgemäßes Verfahren zumindest teilweise auszuführen.

Gegenstand der vorliegenden Erfindung ist des weiteren eine Daten zur Übertragung über ein Telekommunikationsnetz bereithaltende Einrichtung, welche zumindest zur Datenübertragung mittels eines Datenübertragungsdienstes des Telekommunikationsnetzes mit dem Telekommunikationsnetz, vorzugsweise einem Mobilfunknetz, insbesondere gemäß einem GPRS- und/oder UMTS-Funknetzstandard, verbunden ist, welche ausgebildet und/oder eingerichtet ist ein erfindungsgemäßes Verfahren zumindest teilweise auszuführen.

Darüber hinaus betrifft die vorliegende Erfindung ein Endgerät zum Betrieb in Telekommunikationsnetzen, vorzugsweise Mobilfunknetzen, insbesondere gemäß einem GPRS- und/oder UMTS-Funknetzstandard, welches ausgebildet und/oder eingerichtet ist ein erfindungsgemäßes Verfahren zumindest teilweise auszuführen.

Im Stand der Technik sind verschiedene Systeme, Verfahren und/oder Vorrichtungen zur Übertragung von Daten in Telekommunikationsnetzen, insbesondere Mobilfunknetzen gemäß einem GPRS- und/oder UMTS-Funknetzstandard, bekannt, beispielsweise aus der US 2005/0037801 A1, welche ein sogenanntes Mobile Messaging System offenbart.

Entsprechende Systeme, Verfahren und/oder Vorrichtungen zur Übertragung von Daten in Telekommunikationsnetzen, insbesondere Mobilfunknetzen gemäß einem GPRS- und/oder UMTS-Funknetzstandard, finden insbesondere im Zusammenhang mit dem Herunterladen, dem sogenannten Download, von einer Daten zur Übertragung bereithaltenden Einrichtung auf ein Endgerät über ein Telekommunikationsnetz Anwendung. In der Regel wird dabei von dem in dem Telekommunikationsnetz betreibbaren Endgerät eine Anforderung zur Übertragung von Daten über das Telekommunikationsnetz an die Daten zur Übertragung bereithaltende Einrichtung gesendet, woraufhin die Daten bereithaltende Einrichtung die entsprechend angeforderten Daten über das Telekommunikationsnetz an das Endgerät überträgt. Ein solches Datei-Download ist üblicherweise kostenpflichtig. Die Kosten entstehen für den Nutzer des Endgerätes in der Regel mit der Übertragung der Daten von der die Daten bereithaltenden Einrichtung an das Endgerät, unabhängig davon, ob diese Daten seitens des Endgerätes in funktionsfähigem Zustand ankommen und/oder überhaupt nutzbar sind.

Besonders nachteilig ist, dass eine Übertragung von Daten und damit eine Bezahlungspflicht derselben auch dann erfolgt, wenn seitens des die Daten anfordernden Endgerätes nicht genügend freier Speicherplatz zur Speicherung der angeforderten Daten zur Verfügung steht. In einem solchen Fall sind die Daten seitens des Endgerätes nur unvollständig und nicht beziehungsweise nicht bestimmungsgemäß nutzbar. Dennoch wird die Datenübertragung in der Regel für den Nutzer des Endgerätes kostenpflichtig. Darüber hinaus wird das Telekommunikationsnetz durch die insofern überflüssige Datenübertragung unnötig ausgelastet und so Ressourcen des Telekommunikationsnetzes unnötig gebunden.

Der Erfindung liegt in Anbetracht dieses Standes der Technik die Aufgabe zugrunde, die eingangs genannte Übertragung von Daten in Telekommunikationsnetzen zu verbessern.

Zur technischen Lösung wird mit der vorliegenden Erfindung ein Verfahren zur Übertragung von Daten in Telekommunikationsnetzen, vorzugsweise Mobilfunknetzen, insbesondere gemäß einem GPRS- und/oder UMTS-Funknetzstandard, mittels eines Datenübertragungsdienstes eines Telekommunikationsnetzes, wobei ein in einem Telekommunikationsnetz betreibbares Endgerät eine Datenübertragungsanforderung über das Telekommunikationsnetz an eine Daten zur Übertragung bereithaltende Einrichtung sendet und die Daten zur Übertragung bereithaltende Einrichtung die entsprechend der Datenübertragungsanforderung angeforderten Daten über das Telekommunikationsnetz an das Endgerät sendet, vorgeschlagen, welches dadurch gekennzeichnet ist, dass die Datenübertragungsanforderung eine Information über seitens des Endgerätes zur Speicherung und/oder Weiterverarbeitung von Daten frei zur Verfügung stehenden Speicherplatz aufweist.

Der Erfindung liegt die Erkenntnis zugrunde, dass eine verbesserte Übertragung von Daten in Telekommunikationsnetzen erzielbar ist, wenn die Datenübertragungsanforderung eine Information über den seitens des Endgerätes zur Speicherung und/oder Weiterverarbeitung von Daten frei zur Verfügung stehenden Speicherplatz aufweist, so dass die Daten zur Übertragung bereithaltende Einrichtung vor der Datenübertragung feststellen beziehungsweise überprüfen kann, ob die Übertragung der angeforderten Daten entsprechende Datenübertragungsanforderung erfolgreich erfolgen kann oder nicht.

Vorteilhafterweise wird seitens des Endgerätes im Rahmen der Erstellung der Datenübertragungsanforderung die Information über den seitens des Endgerätes zur Speicherung und/oder Weiterverarbeitung von Daten frei zur Verfügung stehenden Speicherplatz ermittelt und in die Datenübertragungsanforderung eingefügt.

Eine weitere vorteilhafte Ausgestaltung der Erfindung sieht vor, dass seitens des Telekommunikationsnetzes oder seitens der Daten zur Übertragung bereithaltenden Einrichtung aus der empfangenen Datenübertragungsanforderung die Information über seitens des Endgerätes zur Speicherung und/oder Weiterverarbeitung von Daten frei zur Verfügung stehenden Speicherplatz erfasst und mit einer Information über den benötigten Speicherplatz zur Speicherung und/oder Weiterverarbeitung der entsprechend der Datenübertragungsanforderung angeforderten Daten verglichen wird.

Vorteilhafterweise werden die entsprechend der Datenübertragungsanforderung angeforderten Daten an das Endgerät gesendet, wenn im Rahmen des Informationsvergleichs festgestellt wird, dass der seitens des Endgerätes zur Speicherung und/oder Weiterverarbeitung von Daten frei zur Verfügung stehende Speicherplatz zumindest genauso groß ist wie der zur Speicherung und/oder Weiterverarbeitung der entsprechend der Datenübertragungsanforderung angeforderten Daten benötigte Speicherplatz und/oder größer ist als der zur Speicherung und/oder Weiterverarbeitung der entsprechend der Datenübertragungsanforderung angeforderten Daten benötigte Speicherplatz.

Eine weitere vorteilhafte Ausgestaltung der Erfindung sieht vor, dass an das Endgerät eine Benachrichtigung gesendet wird, wenn im Rahmen des Informationsvergleichs festgestellt wird, dass der seitens des Endgerätes zur Speicherung und/oder Weiterverarbeitung von Daten frei zur Verfügung stehende Speicherplatz kleiner ist als der zur Speicherung und/oder Weiterverarbeitung der entsprechend der Datenübertragungsanforderung angeforderten Daten benötigte Speicherplatz. Durch das Senden einer Benachrichtigung wird vorteilhafterweise die anwenderseitig gegebene Diensterfahrung einer erfindungsgemäßen Datenübertragung weiter verbessert, insbesondere da eine anwendungs- und funktionserklärende Kommunikation erfolgt.

Vorteilhafterweise wird seitens des Endgerätes auf die Benachrichtigung eine Anwendung zur Verwaltung des seitens des Endgerätes zur Speicherung und/oder Weiterverarbeitung von Daten zur Verfügung stehenden Speicherplatzes ausgeführt, vorzugsweise zumindest teilautomatisch nach einer Aktivierungseingabe seitens des Endgerätes und/oder automatisch. Die Anwendung zur Verwaltung des Speicherplatzes seitens des Endgerätes ist vorteilhafterweise eine Speicherplatzmanagementanwendung.

Eine weitere Ausgestaltung der Erfindung sieht vor, dass im Rahmen der Anwendung seitens des Endgerätes gespeicherte Daten zumindest teilweise hinsichtlich des Speicherplatzbedarfs komprimiert, in einen anderen Speicherplatz verschoben und/oder gelöscht werden, vorzugsweise zumindest teilautomatisch nach einer Aktivierungseingabe seitens des Endgerätes und/oder automatisch.

Eine weitere Ausgestaltung der Erfindung sieht vor, dass die entsprechend der Datenübertragungsanforderung angeforderten Daten in einer entsprechend der Information über seitens des Endgerätes zur Speicherung und/oder Weiterverarbeitung von Daten frei zur Verfügung stehenden Speicherplatz angepassten Datengröße an das Endgerät gesendet werden. Vorteilhafterweise werden die an das Endgerät zu sendenden Daten in einer komprimierten Form an das Endgerät gesendet, wobei die Komprimierung der zu sendenden Daten entsprechend der Information über seitens des Endgerätes zur Speicherung und/oder Weiterverarbeitung von Daten frei zur Verfügung stehenden Speicherplatz erfolgt. Die Komprimierung der Daten erfolgt vorteilhafterweise seitens des Telekommunikationsnetzes und/oder seitens der Daten zur Übertragung bereithaltenden Einrichtung.

Eine weitere Ausgestaltung der Erfindung sieht vor, dass die an das Endgerät gesendeten Daten seitens des Endgerätes dekomprimiert werden.

Gemäß einer weiteren vorteilhaften Ausgestaltung der Erfindung werden seitens der Daten zur Übertragung bereithaltenden Einrichtung bereitgehaltene Daten in unterschiedlichen Datengrößen bereitgehalten und die zu sendenden Daten anhand der Information über den benötigten Speicherplatz zur Speicherung und/oder Weiterverarbeitung der Daten ausgewählt.

Eine weitere vorteilhafte Ausgestaltung der Erfindung ist gekennzeichnet durch die Verwendung eines Hypertext Transfer Protokolls (http: Hypertext Transfer Protocol) für den Datenübertragungsdienst des Telekommunikationsnetzes.

Zur technischen Lösung der eingangs genannten Aufgabe wird mit der vorliegenden Erfindung ferner ein Netzknoten in einem Telekommunikationsnetz, vorzugsweise einem Mobilfunknetz, insbesondere gemäß einem GPRS- und/oder UMTS-Funknetzstandard, welcher an der Übertragung von Daten in dem Telekommunikationsnetz mittels eines Datenübertragungsdienstes des Telekommunikationsnetzes beteiligt ist, vorgeschlagen, welcher ausgebildet und/oder eingerichtet ist, ein erfindungsgemäßes Verfahren zumindest teilweise auszuführen. Vorteilhafterweise ist der Netzknoten eine Servereinrichtung für den Datenübertragungsdienst des Telekommunikationsnetzes.

Zur technischen Lösung der eingangs genannten Aufgabe wird mit der vorliegenden Erfindung darüber hinaus eine Daten zur Übertragung über ein Telekommunikationsnetz bereithaltende Einrichtung, welche zumindest zur Datenübertragung mittels eines Datenübertragungsdienstes des Telekommunikationsnetzes mit dem Telekommunikationsnetz, vorzugsweise einem Mobilfunknetz, insbesondere gemäß einem GPRS- und/oder UMTS-Funknetzstandard, verbunden ist, welcher ausgebildet und/oder eingerichtet ist ein erfindungsgemäßes Verfahren zumindest teilweise auszuführen. Vorteilhafterweise ist die Einrichtung eine Servereinrichtung für den Datenübertragungsdienst des Telekommunikationsnetzes.

Darüber hinaus wird mit der vorliegenden Erfindung ein Endgerät zum Betrieb in Telekommunikationsnetzen, vorzugsweise Mobilfunknetzen, insbesondere gemäß einem GPRS- und/oder UMTS-Funknetzstandard, welches ausgebildet und/oder eingerichtet ist, ein erfindungsgemäßes Verfahren zumindest teilweise auszuführen, bereitgestellt. Vorteilhafterweise ist das Endgerät ein mobiles Endgerät, vorzugsweise in Form eines Mobilfunktelefons.

Weitere Einzelheiten, Merkmale und Vorteile der Erfindung werden nachfolgend anhand des in der Figur der Zeichnung dargestellten Ausführungsbeispiels näher erläutert. Dabei zeigt:

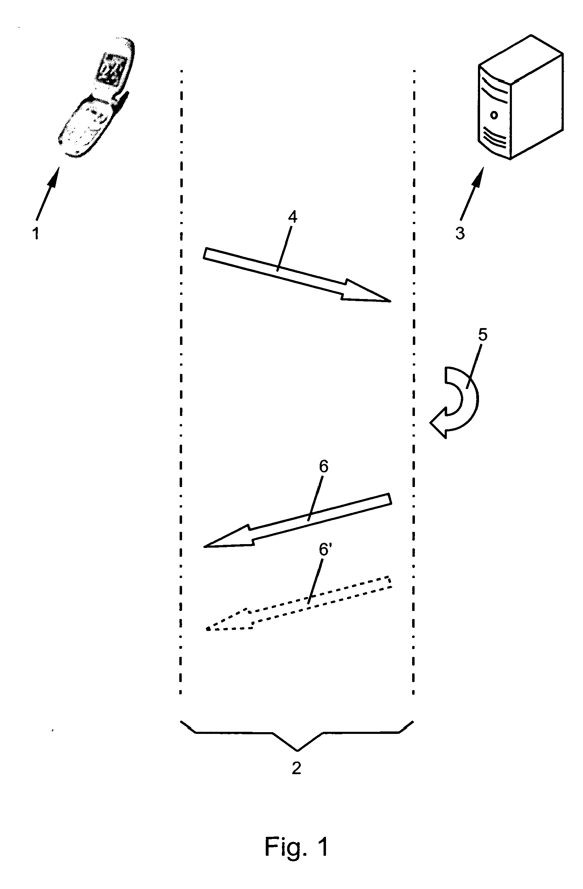

- Fig. 1: in einer schematischen Prinzipdarstellung eine erfindungsgemäße Datenübertragung in einem Mobilfunknetz gemäß einem GPRS- und/oder UMTS-Funknetzstandard.

Fig. 1 zeigt ein in einem Mobilfunknetz 2 gemäß einem GPRS- und/oder UMTS-Funknetzstandard betreibbares Mobilfunktelefon 1 und eine die erfindungsgemäße Datenübertragung realisierende Einrichtung 3, vorliegend eine in dem Mobilfunknetz 2 für den Datenübertragungsdienst des Mobilfunknetzes 2 vorgesehene Servereinrichtung.

Im Rahmen einer erfindungsgemäßen Datenübertragung sendet das Mobilfunktelefon 1 über das Mobilfunknetz 2 eine Datenübertragungsanforderung 4 an die Servereinrichtung 3. Die Datenübertragungsanforderung 4 umfasst dabei eine Information über den seitens des Mobilfunktelefons 1 zur Speicherung und/oder Weiterverarbeitung von Daten frei zur Verfügung stehenden Speicherplatz. Seitens des Mobilfunktelefons 1 ist dabei als Speichereinrichtung zur Speicherung von Daten ein austauschbares Speichermedium, vorliegend insbesondere eine austauschbare Speicherkarte in Form einer sogenannten SD Memory Card (SD Memory Card: Secure Digital Memory Card (sichere digitale Speicherkarte), einer sogenannten Compact-Flash-Karte (Compact Flash: CF) oder dergleichen Speicherkarte eingesetzt. Die Servereinrichtung 3 ermittelt aus der Datenübertragungsanforderung 4 die Information über den seitens des Mobilfunktelefons 1 zur Speicherung und/oder Weiterverarbeitung von Daten frei zur Verfügung stehenden Speicherplatz und vergleicht diesen mit dem zur Speicherung und/oder Weiterverarbeitung der entsprechend der Datenübertragungsanforderung angeforderten Daten benötigten Speicherplatz. Die angeforderten Daten sind vorliegend seitens einer Speichereinrichtung der Servereinrichtung 3 gespeichert. Die Ermittlung der Information über den seitens des Mobilfunktelefons 1 frei zur Verfügung stehenden Speicherplatz zur Speicherung und/oder Weiterverarbeitung von Daten als auch der Informationsvergleich hinsichtlich des benötigten Speicherplatzes zur Speicherung und/oder Weiterverarbeitung der entsprechend der Datenübertragungsanforderung 4 angeforderten Daten ist in Fig. 1 durch den mit dem Bezugszeichen 5 gekennzeichneten Pfeil symbolisch dargestellt.

Wenn im Rahmen des Informationsvergleichs 5 festgestellt wird, dass der seitens des Mobilfunktelefons 1 zur Speicherung und/oder Weiterverarbeitung von Daten frei zur Verfügung stehende Speicherplatz zumindest genauso groß ist wie der zur Speicherung und/oder Weiterverarbeitung der entsprechend der Datenübertragungsanforderung 4 angeforderten Daten benötigte Speicherplatz, sendet die Servereinrichtung 3 über das Mobilfunknetz 2 an das Mobilfunktelefon 1 die entsprechend der Datenübertragungsanforderung 4 angeforderten Daten. Die Übertragung der Daten ist in Fig. 1 symbolisch durch den mit dem Bezugszeichen 6 gekennzeichneten Pfeil dargestellt.

Wird im Rahmen des Informationsvergleichs 5 festgestellt, dass der seitens des Mobilfunktelefons 1 zur Speicherung und/oder Weiterverarbeitung von Daten frei zur Verfügung stehende Speicherplatz kleiner ist als der zur Speicherung und/oder Weiterverarbeitung der entsprechend der Datenübertragungsanforderung 4 angeforderten Daten benötigte Speicherplatz, so sendet die Servereinrichtung 3 über das Mobilfunknetz 2 an das Mobilfunktelefon 1 eine entsprechende Nachricht. Das Senden einer solchen Nachricht ist in Fig. 1 symbolisch durch den mit dem Bezugszeichen 6' gekennzeichneten gestrichelten Pfeil dargestellt.

Das in der Figur der Zeichnung dargestellte und im Zusammenhang mit diesem beschriebene Ausführungsbeispiel der Erfindung dient lediglich der Erläuterung der Erfindung und ist für diese nicht beschränkend.

### Bezugszeichenliste:

- 1: Endgerät/Mobilfunktelefon
- 2: Telekommunikationsnetz/Mobilfunknetz
- 3: Servereinrichtung (Daten zur Übertragung bereithaltende Einrichtung)
- 4: Datenübertragungsanforderung
- 5: Informationsermittlung und Informationsvergleich
- 6: Datenübertragung
- 6': Benachrichtigung (Speicherplatz)

## Patentansprüche

1. Verfahren zur Übertragung von Daten in Telekommunikationsnetzen, vorzugsweise Mobilfunknetzen,
insbesondere gemäß einem GPRS- und/oder UMTS-Funknetzstandard, mittels eines Datenübertragungsdienstes eines Telekommunikationsnetzes,
wobei
ein in einem Telekommunikationsnetz betreibbares Endgerät eine Datenübertragungsanforderung über das Telekommunikationsnetz an eine Daten zur Übertragung bereithaltende Einrichtung sendet und
die Daten zur Übertragung bereithaltende Einrichtung die entsprechend der Datenübertragungsanforderung angeforderten Daten über das Telekommunikationsnetz an das Endgerät sendet,
**dadurch gekennzeichnet, dass**
die Datenübertragungsanforderung eine Information über seitens des Endgerätes zur Speicherung und/oder Weiterverarbeitung von Daten frei zur Verfügung stehenden Speicherplatz aufweist.

2. Verfahren nach Anspruch 1, **dadurch gekennzeichnet, dass** seitens des Endgerätes im Rahmen der Erstellung der Datenübertragungsanforderung die Information über den seitens des Endgerätes zur Speicherung und/oder Weiterverarbeitung von Daten frei zur Verfügung stehenden Speicherplatz ermittelt und in die Datenübertragungsanforderung eingefügt wird.

3. Verfahren nach Anspruch 1 oder Anspruch 2, **dadurch gekennzeichnet, dass** seitens des Telekommunikationsnetzes oder seitens der Daten zur Übertragung bereithaltenden Einrichtung aus der empfangenen Datenübertragungsanforderung die Information über seitens des Endgerätes zur Speicherung und/oder Weiterverarbeitung von Daten frei zur Verfügung stehenden Speicherplatz erfasst und mit einer Information über den benötigten Speicherplatz zur Speicherung und/oder Weiterverarbeitung der entsprechend der Datenübertragungsanforderung angeforderten Daten verglichen wird.

4. Verfahren nach Anspruch 3, **dadurch gekennzeichnet, dass** die entsprechend der Datenübertragungsanforderung angeforderten Daten an das Endgerät gesendet werden, wenn im Rahmen des Informationsvergleichs festgestellt wird, dass der seitens des Endgerätes zur Speicherung und/oder Weiterverarbeitung von Daten frei zur Verfügung stehende Speicherplatz zumindest genauso groß ist wie der zur Speicherung und/oder Weiterverarbeitung der entsprechend der Datenübertragungsanforderung angeforderten Daten benötigte Speicherplatz.

5. Verfahren nach Anspruch 3 oder Anspruch 4, **dadurch gekennzeichnet, dass** an das Endgerät eine Benachrichtigung gesendet wird, wenn im Rahmen des Informationsvergleichs festgestellt wird, dass der seitens des Endgerätes zur Speicherung und/oder Weiterverarbeitung von Daten frei zur Verfügung stehende Speicherplatz kleiner ist als der zur Speicherung und/oder Weiterverarbeitung der entsprechend der Datenübertragungsanforderung angeforderten Daten benötigte Speicherplatz.

6. Verfahren nach Anspruch 5, **dadurch gekennzeichnet, dass** seitens des Endgerätes auf die Benachrichtigung eine Anwendung zur Verwaltung des seitens des Endgerätes zur Speicherung und/oder Weiterverarbeitung von Daten zur Verfügung stehenden Speicherplatzes (Speicherplatzmanagementanwendung) ausgeführt wird, vorzugsweise zumindest teilautomatisch nach einer Aktivierungseingabe seitens des Endgerätes und/oder automatisch.

7. Verfahren nach Anspruch 6, **dadurch gekennzeichnet, dass** im Rahmen der Anwendung seitens des Endgerätes gespeicherte Daten zumindest teilweise hinsichtlich des Speicherplatzbedarfs komprimiert, in einen anderen Speicherplatz verschoben und/oder gelöscht werden, vorzugsweise zumindest teilautomatisch nach einer Aktivierungseingabe seitens des Endgerätes und/oder automatisch.

8. Verfahren nach einem der Ansprüche 3 bis 7, **dadurch gekennzeichnet, dass** die entsprechend der Datenübertragungsanforderung angeforderten Daten in einer entsprechend der Information über seitens des Endgerätes zur Speicherung und/oder Weiterverarbeitung von Daten frei zur Verfügung stehenden Speicherplatz angepassten Datengröße an das Endgerät gesendet werden.

9. Verfahren nach Anspruch 8, **dadurch gekennzeichnet, dass** die an das Endgerät zu sendenden Daten in einer komprimierten Form an das Endgerät gesendet werden, wobei die Komprimierung der zu sendenden Daten entsprechend der Information über seitens des Endgerätes zur Speicherung und/oder Weiterverarbeitung von Daten frei zur Verfügung stehenden Speicherplatz erfolgt.

10. Verfahren nach Anspruch 9, **dadurch gekennzeichnet, dass** die Komprimierung der Daten seitens des Telekommunikationsnetzes und/oder seitens der Daten zur Übertragung bereithaltenden Einrichtung erfolgt.

11. Verfahren nach Anspruch 9 oder Anspruch 10, **dadurch gekennzeichnet, dass** die an das Endgerät gesendeten Daten seitens des Endgerätes dekomprimiert werden.

12. Verfahren nach Anspruch 8, **dadurch gekennzeichnet, dass** seitens der Daten zur Übertragung bereithaltenden Einrichtung bereitgehaltene Daten in unterschiedlichen Datengrößen bereitgehalten werden und die zu sendenden Daten anhand der Information über den benötigten Speicherplatz zur Speicherung und/oder Weiterverarbeitung der Daten ausgewählt werden.

13. Netzknoten in einem Telekommunikationsnetz,
vorzugsweise einem Mobilfunknetz,
insbesondere gemäß einem GPRS- und/oder UMTS-Funknetzstandard, welcher
an der Übertragung von Daten in dem Telekommunikationsnetz mittels eines Datenübertragungsdienstes des Telekommunikationsnetzes beteiligt ist,
**dadurch gekennzeichnet, dass**
dieser ausgebildet und/oder eingerichtet ist, ein Verfahren nach einem der Ansprüche 1 bis 12 zumindest teilweise auszuführen.

14. Daten zur Übertragung über ein Telekommunikationsnetz bereithaltende Einrichtung,
welche
zumindest zur Datenübertragung mittels eines Datenübertragungsdienstes des Telekommunikationsnetzes mit dem Telekommunikationsnetz,
vorzugsweise einem Mobilfunknetz,
insbesondere gemäß einem GPRS- und/oder UMTS-Funknetzstandard, verbunden ist,
**dadurch gekennzeichnet, dass**
diese ausgebildet und/oder eingerichtet ist, ein Verfahren nach einem der Ansprüche 1 bis 12 zumindest teilweise auszuführen.

15. Endgerät zum Betrieb in Telekommunikationsnetzen,
vorzugsweise Mobilfunknetzen,
insbesondere gemäß einem GPRS- und/oder UMTS-Funknetzstandard,
**dadurch gekennzeichnet, dass**
diese ausgebildet und/oder eingerichtet ist, ein Verfahren nach einem der Ansprüche 1 bis 12 zumindest teilweise auszuführen.
